# EUROPEAN PATENT SPECIFICATION

(11) **EP 0 425 086 B1**
(45) Date of publication and mention of the grant of the patent: **12.05.1993**
(21) Application number: 90310071.7
(22) Date of filing: 14.09.1990
(51) Int. Cl.: B22D 41/02, C04B 35/18

(54) **Composition and method for manufacturing steel-containment equipment**
Auskleidungszusammentzung eines Stahl enthaltenden Anlagenteils und Verfahren zur Herstellung
Matière de revêtement d'une installation contenant de l'acier et procédé de fabrication

(30) Priority: 23.10.1989 US 424950; 21.05.1990 US 527033
(43) Date of publication of application: 02.05.1991
(73) Proprietor: MAGNECO/METREL, INC., Addison, Illinois 60101 (US)
(72) Inventor: Banerjee, Subrata, Wheaton, Illinois 60187 (US); Connors, Charles W., Jr., Chicago, Illinois 60614 (US)
(74) Representative: Baverstock, Michael George Douglas

(56) References cited:
- DE-A- 1 471 213
- FR-A- 2 190 759
- FR-A- 2 228 742
- FR-A- 2 247 433
- US-A- 3 230 100
- CHEMICAL ABSTRACTS, vol. 101, no. 24, 10th December 1984, page 246, abstract no. 215371m, Columbus, Ohio, US; T. ISHIBASHI et al.: "Dense and high-strength castable materials for blast-furnace troughs", & TAIKABUTSU 1984, 36(319), 467-72

## Description

This invention relates to a casting composition for use in the construction of troughs, runners, ladles and other vessels which are used for containing and processing molten iron and steel. When compared with known casting compositions, the composition of the invention requires much less drying time and is less prone to cracking or explosion during drying.

The composition of the invention can be prepared by mixing 55-90% by weight of a refractory base material, such as calcined clay, mullite, brown fused alumina or tabular alumina, with up to 35% by weight of silicon carbide and 8-14% by weight of a binder material which includes very fine (preferably colloidal) silica particles dispersed in water.

Brown fused alumina is a term of art which refers to a dark brown, glassy looking material including approximately 93-98% by weight alumina, and smaller amounts of titania, silica and iron. Tabular alumina is a term of art which refers to a white, opaque material including approximately 98.5-99.9% by weight alumina and smaller amounts of sodium oxide, silica, magnesium oxide and calcium oxide. Calcined clay is a term of art which refers to a composition having approximately 43-48% by weight alumina, 47-50% by weight silica, and smaller amounts of titania, iron and sodium oxide. Mullite is a term of art which refers to a composition containing approximately 57-73% by weight alumina, 27-40% by weight silica, and smaller amounts of impurities.

Preferably, the composition will also include between .02-1% by weight of a setting agent such as magnesium oxide or calcium aluminate cement, 5-20% by weight of calcined alumina, and 1-10% by weight of microsilica. Calcined alumina is a term of art which refers to a composition containing approximately 99.6% by weight of alumina and trace amounts of sodium oxide and silica. The primary difference between calcined alumina and tabular alumina is that calcined alumina has a lower firing temperature (about 2600°-2700°F) than tabular alumina (about 3400°F). As a result, calcined alumina is finer and more reactive than tabular alumina.

Between 2-10% by weight of a graphite material may optionally be included as a nonwetting agent and to inhibit the chemical reaction between "slag" (present in molten steel) and the refractory base material.

The use of a colloidal silica binder represents an improvement over known casting compositions which utilize calcium aluminate cement and/or clay. Calcium aluminate cement and clay chemically bind to water. Therefore, troughs and runners produced from compositions which include these binder materials are relatively difficult to dry, requiring between 30-80 hours of drying time at temperatures of up to 1500°F, depending upon the thickness of the structure. Furthermore, the structures may crack or even explode during drying at temperatures above 250°F. Complete removal of residual water is an essential step in the production of troughs and runners, partly to prevent cracking and explosion during use when the structures are exposed to molten iron and steel.

Troughs and runners produced from casting compositions which utilize colloidal silica binders. require much less drying time because the silica does not become chemically attached to residual water. Typically, these structures become set after 15 minutes - 5 hours at room temperature, followed by 5-30 hours during which time the structure is heated to the desired temperature (i.e., above 250°F) and completely dried. The amount of setting time required depends on the thickness of the structure. Furthermore, the risks of cracking and/or explosion are substantially eliminated when a colloidal silica binder is used. The colloidal silica binder also imparts several other advantages to the trough or runner including increased strength and improved resistance to oxidation, corrosion and erosion.

An additional advantage of the casting composition of the invention is that it has improved flow characteristics which allow it to be transported to the casting mold using a standard concrete pump. This constitutes a major advantage over casting compositions of the prior art which, due to relatively poor flow characteristics, had to be transported to the mold using a hopper and crane. By using a concrete pump of a type well known for transporting cement, the amount of time required to transport the casting composition and fill the mold in a typical application can be reduced from between 6-8 minutes to about 30 seconds.

The casting composition of the invention includes, as a major component, a refractory base material in an amount of between 55-90% by weight. The refractory base material preferably has an average particle diameter of between 30 micrometers and 7 millimeters and preferably is composed of calcined clay, mullite, brown fused alumina, tabular alumina or mixtures thereof. When calcined clay or mullite is utilized, the amount is preferably between 60-75% by weight. When brown fused alumina is used, the amount is preferably between 65-80% by weight. For tabular alumina, the amount is preferably between 70-90% by weight.

In addition to the refractory material, the casting composition includes silicon carbide in an amount of between 1-35% by weight, and more preferably in an amount of between 5-25% by weight. The silicon carbide preferably has an average diameter of between 30 micrometers and 1.5 millimeters. The silicon carbide reduces physical erosion of troughs and runners constructed using the casting composition of the invention and helps prevent the base material from reacting chemically with the slag.

The casting composition may optionally include 2-10% by weight of graphite which ultimately acts as a nonwetting agent to prevent attachment to or penetration of the base material by slag. The purpose of the graphite is to further inhibit chemical reaction between slag and base material. The graphite may be amorphous or crystalline or in the form of flakes.

The casting composition of the invention includes a silica binder which is formed from finely dispersed (preferably colloidal) silica particles in an aqueous medium. Silica having an average diameter of preferably between 4-100 millimicrons, and most preferably 8-20 millimicrons, is initially dispersed in water in an amount of between 15-70% by weight, preferably about 40% by weight. The resulting colloidal silica binder is then mixed with the other components of the casting composition in an amount of between 8-14% based on the weight of the resulting composition.

The casting composition preferably includes between .02-1% of a setting agent. Examples of suitable setting agents are calcium aluminate cement and magnesium oxide. Finally, the casting composition preferably includes between 5-20% by weight of calcined alumina and between 1-10% by weight of microsilica.

The calcined alumina reacts with the silica binder to form a sediment phase which causes improved binding characteristics, particularly at higher temperatures. The calcined alumina preferably has an average diameter of .2-70 microns. The microsilica improves the initial flow characteristics of the casting composition. The microsilica preferably has an average diameter of .1-1.0 microns, and most preferably between .15-.25 microns.

When manufacturing containment equipment from the composition of the invention, the dry components are initially mixed together. Then, the aqueous silica dispersion is added to the dry blend and the resulting damp mixture is transported to the mold using a concrete pump and formed into the ultimate shape of the trough, runner or other containment structure. The containment structure is dried at room temperature for 15 minutes to 5 hours, and then at higher temperature (i.e., above 250°F) for 5-30 hours. The drying times may vary considerably depending on the wall thicknesses of the containment structure.

An example of a concrete pump which is suitable for use with the casting composition of the invention is the Thom-Kat TVS16-2065, available from Pultzmeister, Inc., Thomsen Division, Gardena, California 90248. Such a concrete pump is described in U.S. Patent No. 3,832,097, and in German Patent No. 2,162,406, the entire disclosures of which are incorporated herein by reference. While such concrete pumps have long been useful for transporting cement, it was not previously possible to use concrete pumps to transport casting compositions of the types used in the iron and steel industry. Other commercially available concrete pumps can also be used to transport the casting composition of the invention.

While the embodiments of the invention disclosed herein are presently considered to be preferred, it is understood that various modifications an improvements can be made without departing from the scope of the claims.

### EXAMPLE I

A casting composition was prepared by mixing the following components together in the stated weight percentages:
a) 25% brown fused alumina having an average particle diameter of 4 millimeters;
b) 20% brown fused alumina having an average particle diameter of 1 millimeter;
c) 15% brown fused alumina having an average particle diameter of 200 microns;
d) 15% silicon carbide having an average particle diameter of 100 microns;
e) 5% calcined alumina having an average particle diameter of 50 microns;
f) 5% graphite having an average particle diameter of 100 microns;
g) .2% magnesia having an average particle diameter of 100 microns;
h) 5% microsilica having an average diameter of 0.2 microns; and
i) 10% silica binder consisting of 40% by weight colloidal silica having an average diameter of 20 millimicrons, dispersed in an aqueous medium.

The resulting casting composition yielded structures which had reduced drying times, reduced cracking and explosion, increased strength, and improved resistance to oxidation, corrosion and erosion.

### EXAMPLE II

A casting composition was prepared by mixing the following components together in the stated weight percentages:
a) 25% mullite having an average diameter of 2 millimeters;
b) 15% mullite having an average diameter of 800 microns;
c) 20% mullite having an average diameter of 200 microns;
d) 13% silicon carbide having an average diameter of 100 microns;
e) 5% calcined alumina having an average diameter of 100 microns;
f) 5% graphite having an average diameter of 100 microns;
g) .2% magnesia having an average diameter of 100 microns;
h) 5% microsilica having an average diameter of 0.15 microns; and
i) 12% silica binder consisting of 40% by weight colloidal silica having an average diameter of 20 millimicrons, dispersed in an aqueous medium.

The resulting casting composition yielded structures which had reduced drying times, reduced cracking and explosion, increased strength, and improved resistance to oxidation, corrosion and erosion.

## Claims

1. A casting composition for use in the construction of troughs and runners for the iron and steel industry, comprising:
55-90% by weight of a granular base material selected from calcined clay, mullite, brown fused alumina, tabular alumina and mixtures thereof;
1-35% by weight of silicon carbide; and
8-14% by weight of a binder formed from a dispersion of 15-70% by weight colloidal silica in water.

2. A casting composition as claimed in claim 1 wherein the granular base material comprises calcined clay having an average diameter of between 30 micrometers and 7 millimeters.

3. A casting composition as claimed in claim 2 wherein the calcined clay is present in an amount of between 60-75% by weight.

4. A casting compostion as claimed in claim 2 or claim 3 wherein the calcined clay comprises 43-48% by weight alumina, 47-50% by weight silica, and smaller amounts of titania, iron and sodium oxide.

5. A casting composition as claimed in claim 1 wherein the granular base material comprises mullite having an average diameter of between 30 micrometers and 7 millimeters.

6. A casting compostion as claimed in claim 5 wherein the mullite is present in an amount of between 60-75% by weight.

7. A casting composition as claimed in claim 5 or claim 6 wherein the mullite comprises between 57-73% by weight alumina, 27-40% by weight silica, and smaller amounts of impurities.

8. A casting composition as claimed in claim 1 wherein the granular base material comprises brown fused alumina having an average diameter of between 30 micrometers and 7 millimeters.

9. A casting composition as claimed in claim 8 wherein the brown fused alumina is present in an amount of between 65-80% by weight.

10. A casting composition as claimed in claim 8 or claim 9 wherein the brown fused alumina comprises 93-98% by weight alumina and smaller amounts of titania, silica and iron.

11. A casting composition as claimed in claim 1 wherein the granular base material comprises tabular alumina having an average diameter of between 30 micrometers and 7 millimeters.

12. A casting composition as claimed in claim 11 wherein the tabular alumina is present in an amount of between 70-90% by weight.

13. A casting composition as claimed in claim 11 or claim 12 wherein the tabular alumina comprises 98.5-99.9% by weight alumina and smaller amounts of sodium oxide, silica, magnesium oxide and calcium oxide.

14. A casting composition as claimed in any one of the preceding claims further comprising a setting agent selected from magnesium oxide, calcium aluminate cement and mixtures thereof.

15. A casting composition as claimed in claim 14 wherein the setting agent is present in an amount of between .02-1% by weight.

16. A casting composition as claimed in any one of the preceding claims wherein the binder is formed from a dispersion of about 40% by weight colloidal silica in water.

17. A casting composition of claim 1 wherein the silica has an average diameter of between 4-100 millimicrons, preferably between 8-20 millimicrons.

18. A casting composition as claimed in any one of the preceding claims wherein the silicon carbide has an average diameter of between 30 micrometers and 1.5 millimeters.

19. A casting composition as claimed in any one of the preceding claims wherein the silicon carbide is present in an amount of between 5-25% by weight.

20. A casting composition as claimed in any one of the preceding claims further comprising 2-10% by weight of a graphite material.

21. A casting composition as claimed in any one of the preceding claims further comprising 5-20% by weight calcined alumina.

22. A casting composition as claimed in any one of the preceding claims further comprising 1-10% by weight of microsilica having an average diameter of between .1-1.0 microns.

23. A casting composition as claimed in claim 1 comprising:
55-85% by weight of a granular base material selected from the group consisting of calcined clay, mullite, brown fused alumina, tabular alumina and mixtures thereof;
5-25% by weight of silicon carbide;
8-14% by weight of a binder formed from a dispersion of 15-70% by weight silica in water; and
.02-1% of a setting agent selected from the group consisting of magnesium oxide, calcium aluminate cement and mixtures thereof.

24. A casting composition as claimed in claim 1 comprising:
55-80% of a granular base material selected from the group consisting of calcined clay, mullite, brown fused alumina, tabular alumina and mixtures thereof;
0-35% by weight of silicon carbide;
5-20% by weight of calcined alumina;
1-10% by weight of microsilica;
8-14% by weight of a binder formed from a dispersion of 15-70% by weight silica in water; and
2-10% by weight of a graphite material.

25. A casting composition as claimed in any one of the preceding claims after the water has been partially or totally evaporated from the composition.

26. A trough or runner formed from a casting composition as claimed in any one of the preceding claims.

27. A method for manufacturing steel containment equipment, comprising the steps of:
forming a casting composition comprising a granular base material selected from the group consisting of calcined clay, mullite, brown fused alumina, tabular alumina, and mixtures thereof, said casting composition further comprising a binder formed from a dispersion of 15-70% by weight colloidal silica in water;
transporting the casting composition to a mold assembly using a concrete pump; and
molding the casting composition to form a steel containment device.

## Patentansprüche

1. Gußzusammensetzung zur Anwendung bei der Herstellung von Mulden und Rinnen für die Eisen- und Stahlindustrie, die umfaßt:
55 - 90 Masseprozent eines körnigen Grundmaterials, das aus gebranntem Ton, Mullit, braunem Schmelzkorund, tabularem Aluminiumoxid und Mischungen daraus ausgewählt wird;
1 - 35 Masseprozent Siliziumkarbid; und
8 - 14 Masseprozent eines Bindemittels, das aus einer Dispersion von 15 - 70 Masseprozent kolloidalem Siliziumoxid in Wasser besteht.

2. Gußzusammensetzung nach Anspruch 1, wobei das körnige Grundmaterial gebrannten Ton mit einem durchschnittlichen Durchmesser zwischen 30 Mikrometern und 7 Millimetern umfaßt.

3. Gußzusammensetzung nach Anspruch 2, wobei der gebrannte Ton in einer Menge zwischen 60 und 75 Masseprozent vorliegt.

4. Gußzusammensetzung nach Anspruch 2 oder Anspruch 3, wobei der gebrannte Ton 43 - 48 Masseprozent Aluminiumoxid, 47 - 50 Masseprozent Siliziumoxid und kleinere Mengen Titandioxid, Eisen und Natriumoxid umfaßt.

5. Gußzusammensetzung nach Anspruch 1, wobei das körnige Grundmaterial Mullit mit einem durchschnittlichen Durchmesser zwischen 30 Mikrometern und 7 Millimetern umfaßt.

6. Gußzusammensetzung nach Anspruch 5, wobei der Mullit in einer Menge zwischen 60 und 75 Masseprozent vorliegt.

7. Gußzusammensetzung nach Anspruch 5 oder Anspruch 6, wobei der Mullit zwischen 57 und 73 Masseprozent Aluminiumoxid, 27 - 40 Masseprozent Siliziumoxid und kleinere Mengen Verunreinigungen enthält.

8. Gußzusammensetzung nach Anspruch 1, wobei das körnige Grundmaterial braunes Schmelzkorund mit einem durchschnittlichen Durchmesser zwischen 30 Mikrometern und 7 Millimetern umfaßt.

9. Gußzusammensetzung nach Anspruch 8, wobei das braune Schmelzkorund in einer Menge zwischen 65 und 80 Masseprozent vorliegt.

10. Gußzusammensetzung nach Anspruch 8 oder Anspruch 9, wobei das braune Schmelzkorund 93 - 98 Masseprozent Aluminiumoxid und kleinere Mengen Titandioxid, Siliziumoxid und Eisen enthält.

11. Gußzusammensetzung nach Anspruch 1, wobei das körnige Grundmaterial tabulares Aluminiumoxid mit einem durchschnittlichen Durchmesser zwischen 30 Mikrometern und 7 Millimetern umfaßt.

12. Gußzusammensetzung nach Anspruch 11, wobei das tabulare Aluminiumoxid in einer Menge zwischen 70 und 90 Masseprozent vorliegt.

13. Gußzusammensetzung nach Anspruch 11 oder Anspruch 12, wobei das tabulare Aluminiumoxid 98,5 - 99,9 Masseprozent Aluminiumoxid und kleinere Mengen Natriumoxid, Siliziumoxid, Magnesiumoxid und Calciumoxid umfaßt.

14. Gußzusammensetzung nach einem der vorangehenden Ansprüche, die weiterhin ein Aushärtemittel umfaßt, da aus Magnesiumoxid, Calciumaluminat-Zement und Mischungen daraus ausgewählt wird.

15. Gußzusammensetzung nach Anspruch 14, wobei das Aushärtemittel in einer Menge zwischen 0,02 und 1 Masseprozent vorliegt.

16. Gußzusammensetzung nach einem der vorangehenden Ansprüche, wobei das Bindemittel aus einer Dispersion von ungefähr 40 Masseprozent kolloidalem Siliziumoxid in Wasser besteht.

17. Gußzusammensetzung nach Anspruch 1, wobei das Siliziumoxid einen durchschnittlichen Durchmesser zwischen 4 und 100 Nanometern, vorzugsweise zwischen 8 und 20 Nanometern hat.

18. Gußzusammensetzung nach einem der vorangehenden Ansprüche, wobei das Siliziumkarbid einen durschnittlichen Durchmesser zwischen 30 Mikrometern und 1,5 Millimetern hat.

19. Gußzusammensetzung nach einem der vorangehenden Ansprüche, wobei das Siliziumkarbid in einer Menge zwischen 5 und 25 Masseprozent vorliegt.

20. Gußzusammensetzung nach einem der vorangehenden Ansprüche, die weiterhin 2 - 10 Masseprozent eines Graphitmaterials umfaßt.

21. Gußzusammensetzung nach einem der vorangehenden Ansprüche, die weiterhin 5 - 20 Masseprozent gebranntes Aluminiumoxid umfaßt.

22. Gußzusammensetzung nach einem der vorangehenden Ansprüche, die weiterhin 1 - 10 Masseprozent Mikro-Siliziumoxid mit einem durchschnittlichen Durchmesser zwischen 0,1 und 1,0 Mikrometern umfaßt.

23. Gußzusammensetzung nach Anspruch 1, die umfaßt:
55 - 85 Masseprozent eines körnigen Grundmaterials, das aus der aus gebranntem Ton, Mullit, braunem Schmelzkorund, tabularem Aluminiumoxid und Mischungen daraus bestehenden Gruppe ausgewählt wird;
5 - 25 Masseprozent Siliziumkarbid; und
8 - 14 Masseprozent eines Bindemittels, das aus einer Dispersion von 15 - 70 Masseprozent Siliziumoxid in Wasser besteht; und
0,02 - 1 Prozent eines Aushärtemittels, das aus der aus Magnesiumoxid, Calciumaluminat-Zement und Mischungen daraus bestehenden Gruppe ausgewählt wird.

24. Gußzusammensetzung nach Anspruch 1, die umfaßt:
55 - 80 Masseprozent eines körnigen Grundmaterials, das aus der aus gebranntem Ton, Mullit, braunem Schmelzkorund, tabularem Aluminiumoxid und Mischungen daraus bestehenden Gruppe ausgewählt wird;
0 - 35 Masseprozent Siliziumkarbid;
5 - 20 Masseprozent gebranntes Aluminiumoxid;
1 - 10 Masseprozent Mikro-Siliziumoxid;
8 - 14 Masseprozent eines Bindemittels, das aus einer Dispersion von 15 - 70 Masseprozent Siliziumoxid in Wasser besteht; und
2 - 10 Masseprozent eines Graphitmaterials.

25. Gußzusammensetzung nach einem der vorangehenden Ansprüche nachdem das Wasser teilweise oder vollständig aus der Zusammensetzung verdampft worden ist.

26. Aus einer Gußzusammensetzung nach einem der vorangehenden Ansprüche hergestellte Mulde oder Rinne.

27. Verfahren zur Herstellung von Stahlbehältern, die die folgenden Schritte umfaßt:
Herstellen einer Gußzusammensetzung, die ein aus der aus gebranntem Ton, Mullit, braunem Schmelzkorund, tabularem Aluminiumoxid und Mischungen daraus bestehenden Gruppe ausgewähltes körniges Grundmaterial umfaßt, wobei die Gußzusammensetzung weiterhin ein Bindemittel umfaßt, das aus einer Dispersion von 15 - 70 Masseprozent kolloidalem Siliziumoxid in Wasser besteht;
Beförderung der Gußzusammensetzung zu einer Formanordnung unter Verwendung einer Betonpumpe; und
Formen der Gußzusammensetzung zur Herstellung einer Behältervorrichtung für Stahl.

## Revendications

1. Composition de coulée utilisable dans la construction de cuves réfractaires et canaux d'alimentation pour l'industrie sidérurgie comprenant :
55 - 90 % en poids d'une matière de base granulaire choisie parmi l'argile calcinée, la mullite, l'alumine fondue brune, l'alumine tabulaire et leurs mélanges ;
1 - 35 % en poids de carbure de silicium ; et
8 - 14 % en poids d'un liant formé à partir d'une dispersion de 15 - 70 % en poids de silice colloïdale dans l'eau.

2. Composition de coulée suivant la revendication 1, caractérisée en ce que la matière de base granulaire comprend de l'argile calcinée ayant un diamètre moyen entre 30 micromètres et 7 millimètres.

3. Composition de coulée suivant la revendication 2, caractérisée en ce que l'argile calcinée est présente en une quantité se situant entre 60 - 75 % en poids.

4. Composition de coulée suivant l'une ou l'autre des revendications 2 et 3, caractérisée en ce que l'argile calcinée comprend 43 - 48 % en poids d'alumine, 47 - 50 % en poids de silice et des très petites quantités d'oxyde de titane, de fer et d'oxyde de sodium.

5. Composition de coulée suivant la revendication 1, caractérisée en ce que la matière de base granulaire comprend de la mullite ayant un diamètre moyen entre 30 micromètres et 7 millimètres.

6. Composition de coulée suivant la revendication 5, caractérisée en ce que la mullite est présente en une quantité se situant entre 60 - 75 % en poids.

7. Composition de coulée suivant l'une ou l'autre des revendications 5 et 6, caractérisée en ce que la mullite comprend entre 57 - 73 % en poids d'alumine, 27 - 40 % en poids de silice et des très petites quantités d'impuretés.

8. Composition de coulée suivant la revendication 1, caractérisée en ce que la matière de base granulaire comprend de l'alumine fondue brune ayant un diamètre moyen entre 30 micromètres et 7 millimètres.

9. Composition de coulée suivant la revendication 8, caractérisée en ce que l'alumine fondue brune est présente en une quantité se situant entre 65 - 80 % en poids.

10. Composition de coulée suivant l'une ou l'autre des revendications 8 et 9, caractérisée en ce que l'alumine fondue brune comprend 93 - 98 % en poids d'alumine et des très petites quantités d'oxyde de titane, de silice et de fer.

11. Composition de coulée suivant la revendication 1, caractérisée en ce que la matière de base granulaire comprend de l'alumine tabulaire ayant un diamètre moyen entre 30 micromètres et 7 millimètres.

12. Composition de coulée suivant la revendication 11, caractérisée en ce que l'alumine tabulaire est présente en une quantité se situant entre 70 - 90 % en poids.

13. Composition de coulée suivant l'une ou l'autre des revendications 11 et 12, caractérisée en ce que l'alumine tabulaire comprend 98,5 - 99,9 % en poids d'alumine et des très petites quantités d'oxyde de sodium, de silice, d'oxyde de magnésium et d'oxyde de calcium.

14. Composition de coulée suivant l'une quelconque des revendications précédentes, comprenant en outre un agent de prise choisi parmi l'oxyde de magnésium, le ciment d'aluminate de calcium et leurs mélanges.

15. Composition de coulée suivant la revendication 14, caractérisée en ce que l'agent de prise est présent en une quantité se situant entre 0,02 - 1 % en poids.

16. Composition de coulée suivant l'une quelconque des revendications précédentes, caractérisée en ce que le liant est formé à partir d'une dispersion d'environ 40 % en poids de silice colloïdale dans l'eau.

17. Composition de coulée suivant la revendication 1, caractérisée en ce que la silice a un diamètre moyen entre 4 - 100 millimicrons, avantageusement entre 8 - 20 millimicrons.

18. Composition de coulée suivant l'une quelconque des revendications précédentes, caractérisée en ce que le carbure de silicium a un diamètre moyen entre 30 micromètres et 1,5 millimètre.

19. Composition de coulée suivant l'une quelconque des revendications précédentes, caractérisée en ce que le carbure de silicium est présent en une quantité se situant entre 5 - 25 % en poids.

20. Composition de coulée suivant l'une quelconque des revendications précédentes, comprenant en outre 2 - 10 % en poids d'une matière de graphite.

21. Composition de coulée suivant l'une quelconque des revendications précédentes, comprenant en outre 5 - 20 % en poids d'alumine calcinée.

22. Composition de coulée suivant l'une quelconque des revendications précédentes, comprenant en outre 1 - 10 % en poids de microsilice ayant un diamètre moyen entre 0,1 - 1,0 micron.

23. Composition de coulée suivant la revendication 1, comprenant :
55 % - 85 % d'une matière de base granulaire choisie dans le groupe comprenant l'argile calcinée, la mullite, l'alumine fondue brune, l'alumine tabulaire et leurs mélanges ;
5 - 25 % en poids de carbure de silicium ;
8 - 14 % en poids d'un liant formé à partir d'une dispersion de 15 - 70 % en poids de silice dans l'eau ;
0,02 - 1 % d'un agent de prise choisi dans le groupe comprenant l'oxyde de magnésium, le ciment d'aluminate de calcium et leurs mélanges.

24. Composition de coulée suivant la revendication 1, comprenant :
55 - 80 % d'une matière de base granulaire choisie dans le groupe comprenant l'argile calcinée, la mullite, l'alumine fondue brune, l'alumine tabulaire et leurs mélanges ;
0 - 35 % en poids de carbure de silicium ;
5 - 20 % en poids d'alumine calcinée ;
1 - 10 % en poids de microsilice ;
8 - 14 % en poids d'un liant formé à partir d'une dispersion de 15 - 70 % en poids de silice dans l'eau ; et
2 - 10 % en poids d'une matière de graphite.

25. Composition de coulée suivant l'une quelconque des revendications précédentes, après que l'eau a été partiellement ou totalement évaporée de la composition.

26. Cuve réfractaire ou canal d'alimentation formé à partir d'une composition de coulée suivant l'une quelconque des revendications précédentes.

27. Procédé de fabrication d'un équipement de confinement en acier, comprenant les étapes suivantes:
la formation d'une composition de coulée comprenant une matière de base granulaire choisie dans le groupe comprenant l'argile calcinée, la mullite, l'alumine fondue brune, l'alumine tabulaire et leurs mélanges, ladite composition de coulée comprenant en outre un liant formé à partir d'une dispersion de 15 - 70 % en poids de silice colloïdale dans l'eau ;
le transport de la composition de coulée vers un ensemble formant moule en utilisant une pompe à béton ; et
le moulage de la composition de coulée pour former un dispositif de confinement en acier.
